# EUROPEAN PATENT APPLICATION

(11) **EP 4 053 839 A1**
(43) Date of publication of application: **07.09.2022**
(21) Application number: 21161010.0
(22) Date of filing: 05.03.2021
(51) Int. Cl.: G11B 5/008, G01N 23/083, G11B 11/115

(54) **METHOD FOR CONTACTLESS READOUT OF MAGNETIC STORAGE MEDIA BY CIRCULARLY POLARIZED X-RAY BEAMS**

(71) Applicant: PAUL SCHERRER INSTITUT, 5232 Villigen PSI (CH)
(72) Inventor: GLIGA, Sebastian, 8050 Zürich (CH); RAABE, Jörg, 5210 Windisch (CH)
(74) Representative: Fischer, Michael

(57) **Abstract**

It is the objective of the present invention to provide a method to readout magnetic storage media that provides a high throughput for magnetic tapes and readouts the magnetic information with a high fidelity.

This objective is achieved according to the present invention by a method for contactless readout of the magnetic information stored on magnetic tapes (4), said magnetic information being encoded by the magnetization value and direction stored on the magnetic tapes (4), comprising the steps of:
a) providing a first circularly polarized x-ray beam (c+) and a second circularly polarized x-ray beam (c-);
b) orienting the first circularly polarized X-ray beam (c+) and the second circularly polarized X-ray beam (c-) towards the magnetic tape (4);
c) reading out the first circularly polarized X-ray beam (c+) and the second circularly polarized X-ray beam (c-) after their passage through the magnetic tape while advancing the magnetic tape, and
d) determining the magnetic information by the difference between the two readout signals from the first x-ray beam (c+) and the second x-ray beam (c-) based on X-ray magnetic circular dichroism.

Based on this beam splitting scheme, a real-time readout of the magnetic signal stored on the magnetic tape can be achieved by the evaluation of the intensity signals for the c+-X-ray beam and the c- X-ray beam.

## Description

The present invention is related to a method for contactless readout of magnetic storage media by circularly polarized X-rays.

The terms magnetic storage media and magnetic recording media are used interchangeably and refer to media where information is stored magnetically. This invention relates to magnetic recording media in general but is discussed here in terms of magnetic recording tape.

Magnetic recording tape refers to tapes for the storage of information, such as audio and video signals and binary data as well as to other forms of magnetic storage media such as disks.

Magnetic tapes deteriorate over time due to chemical degradation, such as of the binder or the base. This degradation is attributed to oxidation and hydrolysis and, consequently, the tapes exhibit undesirable properties, such as stickiness and excessive shed of the magnetic oxide coating layer. These undesirable properties typically prevent the use of the tapes in equipment for recording or playback.

In 2008, a fire at Universal Studios Hollywood destroyed a warehouse where hundreds of thousands of master tapes belonging to Universal Music Group, including original recordings of best-selling artists as well as unique masters from the 1930s to the 1950s by artists such as Louis Armstrong and Ella Fitzgerald. A significant fraction of these had not even been classified due to the decaying state of the magnetic tapes, making them unreadable by conventional magnetic read heads. Such events serve as reminders of the pressing need to preserve musical cultural heritage.

While the loss of the master tapes due to the fire was estimated to $150 million, the cost of 'loss of artistry' due to tape decay is equally considerable, if not greater, as it affects hundreds of thousands of recordings stored in warehouses across the world, belonging to all music labels. Moreover, hundreds of thousands of tapes in possession of academic or cultural institutions, or in private hands, consisting of unique recordings that could become irrecoverable have been identified by the Magnetic Tape Alert Project, supported by UNESCO. In particular, major labels have shown interest in investigating the technical feasibility of recovering degraded archived audio tapes.

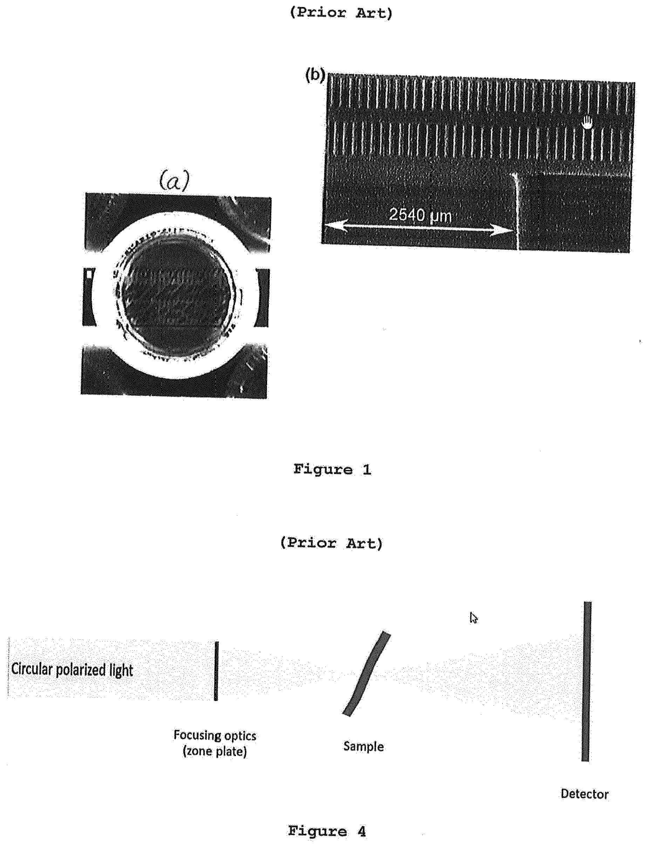

Over the past decades, a number of attempts have been made to retrieve data from magnetic media, such as music and data tapes, using contactless magnetic contrast imaging. Domain patterns on a magnetic tape can be visualized by using ferrous oxide particles in solution placed above the tape, such as with the 3M 'Plastiform' magnetic viewer (see Fig. 1a). However, this technique does not allow recovering magnetic information due to its low resolution and to the fact that the sign of the magnetic field cannot be determined. More recent attempts at recovering the information stored on magnetic tape media include using e.g. magnetoresistive sensors developed for hard disk drives to scan magnetic tapes (see Fig. 1b) as well as scanning SQUID microscopy. While these techniques enable measuring the sign of the magnetic fields and analog waveforms can be recovered, they are slow, have a limited field of view and only realistically allow inspecting very small portions of tape, of the order of a few millimeters. They have so far remained in the 'academic' realm.

Another possibility consists in placing a magneto-optic garnet film in very close proximity of the sample to detect the stray fields along the tape. Very recently, the company 5micron has developed a setup based on this principle, where changes in the magnetic state of the garnet are detected using the Faraday effect. This technology has been commercialized. However, it remains impractical for heavily damaged tapes whose magnetic fields might be particularly complex, making it difficult to reconstruct the original information with high fidelity. In addition, the garnet film needs to be placed very close to the tape surface (ca. 5 microns), which excludes the possibility of reading sections of degraded tapes that are not flat. Moreover, optical defects in the garnet film can equally complicate data recovery.

The most common problems afflicting magnetic tapes are 'sticky shed' syndrome (where the pigment layer binder breaks down due to oxidation and hydrolysis) and 'vinegar' syndrome, where the acetate carrier is degraded. Consequently, the tapes may stick and shed onto player guides and heads or are too brittle and cannot be played. Practically, the tape can in a large number of cases be unwound, and the magnetic pattern is mostly intact, but can only be read using a contactless technique.

It is therefore the objective of the present invention to provide a method to readout magnetic storage media that provides a high throughput for magnetic tapes and directly readouts the magnetic information with a high fidelity.

This objective is achieved according to the present invention by a method for contactless readout of the magnetic information stored on magnetic tapes, said magnetic information being encoded by the magnetization value and direction stored on the magnetic tapes, comprising the steps of:
a) providing a first circularly polarized x-ray beam (c+) and a second circularly polarized x-ray beam (c-);
b) orienting the first circularly polarized X-ray beam (c+) and the second circularly polarized X-ray beam (c-) towards the magnetic tape;
c) reading out the first circularly polarized X-ray beam (c+) and the second circularly polarized X-ray beam (c-) after their passage through the magnetic tape while advancing the magnetic tape, and
d) determining the magnetic information by the difference between the two readout signals from the first x-ray beam (c+) and the second x-ray beam (c-) based on X-ray magnetic circular dichroism.

Based on this beam splitting scheme, a real-time readout of the magnetic signal stored on the magnetic tape can be achieved by the evaluation of the intensity signals for the c+ X-ray beam and the c- X-ray beam. One of the advantages of this technique is that while the advancing speed of the magnetic tape can match that of a magnetic tape player and allow real-time readout, the readout speed can be varied as required by the state of the magnetic tape.

According to a preferred embodiment of the present invention for the provision of the two circularly polarized x-ray beams (c+) and (c-), an X-ray source for generating a linearly polarized x-ray beam is provided. The generated linearly polarized X-ray beam is split into a first linearly polarized X-ray beam and a second linearly polarized X-ray beam. The first linearly polarized X-ray beam and the second linearly polarized X-ray beam are then converted into the first circularly polarized beam (c+) and the second circularly polarized beam (c-).

According to another preferred embodiment of the present invention for the provision of the two circularly polarized x-ray beams (c+) and (c-), a particle beam, in particular an electron beam, is provided which passes along a first undulator to generate the first circularly polarized X-ray beam and along a second undulator to generate the second circularly polarized X-ray beam.

In a preferred embodiment of the present invention, the beam spots can be in the range of 2 to 10 microns, preferably corresponding to the recording or playback head gap, in the vertical direction and 20 to 200 microns, preferably 100 microns, in the horizontal direction whereby these values correspond approximately to an audio track size of the magnetic information stored on the magnetic tape in the horizontal direction and to the resolution of a magnetic read head in the vertical direction.

Suitable characteristics of the x-ray beam can be achieved when the beam energy is in the range from 2 to 50 keV, preferably in the range from 5 to 10 keV. The main requirement is that the beam energy is tuned to an appropriate material absorption edge in order to use the XMCD effect. Hence, the energy range is broad. Further, the beam intensity may range from 10⁸ to 10¹³ photons/second.

A suitable readout sample rate with sufficient speed can be achieved, when the readout sample rate is in the range from 20 to 200 kHz, preferably around 100 kHz.

A further preferred embodiment of the present invention provides for an algorithm to identify the magnitude and the direction of the magnetic information in form the stored magnetic field on the magnetic tapes which uses the signal of two detectors; first detector detects the signal from the c+ X-ray beam and the second detector detects the signal from the c- X-ray beam wherein the magnetic information on the magnetic is determined by the division of the two detected signals c-/c+ or vice versa.

Preferred embodiments of the present invention are hereinafter discussed in more detail with reference to the attached drawings which depict in:
- Fig. 1: (a) the readout of the 3M 'Plastiform' magnetic viewer and (b) the readouts of magneto-resistive sensors developed for hard disk drives to scan magnetic tapes according to the prior art;
- Fig. 2: schematically a first setup to use circularly polarized hard X-rays in transmission to readout the analog waveform from a magnetic music or data tape;
- Fig. 3: schematically a second setup to use circularly polarized hard X-rays in transmission to readout the analog waveform from a magnetic music or data tape;
- Fig. 4: schematically a typical magnetic measurement setup using circularly polarized X-rays to measure magnetic states according to the prior art.

The present invention can be realized by a first setup 2 to mount a magnetic tape 4 and to use circularly polarized hard X-rays in transmission to readout the analog waveform from magnetic music or data tapes 4 (tape spools not illustrated here). An X-ray source 6 generates a linearly polarized x-ray beam 8 that is directed through focusing optics 10, such as a zone plate, and two beam splitter gratings 12a, 12b to split the x-ray beam into two x-ray beams 8a, 8b.

Then, the two x-ray beams 8a and 8b go each through recombiner gratings 14a, 14b, and are converted into two circularly polarized beams c+, c- using circular polarizers. The two circularly polarized beams c+, c- are needed to readout the magnetic state of the magnetic tape 4. The circularly polarized light can be also obtained by using two undulators.

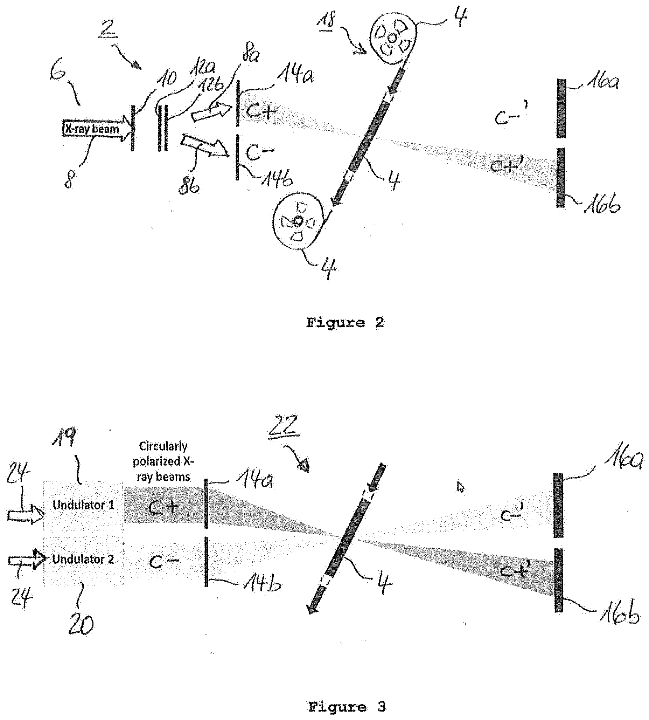

The first setup 2 is schematically illustrated in Fig. 2. It differs from typical magnetic measurement setups (illustrated in Fig. 4), where circularly polarized X-rays are used to measure magnetic states. The polarization is normally changed sequentially, which takes time. In the present setup, the X-ray beam 8 is split into two beams (circularly polarized c+ and c-), allowing fast readout of the magnetic state. Two detectors 16a, 16b are used to readout the signals from the c+ and c- X-ray beams. The magnetic tape 4 can therefore be mounted on a custom-made tape machine 18 allowing the two X-ray beams c+, c- to go through the magnetic tape 4 leading to attenuated x-ray beams c+' and c-'. Due to the magnetization of the magnetic tape 4, the polarized X-ray absorption differs for the c+ and c- beams, depending on the magnetic state (information) of the tape. Hence, the c+' and c-' beams differ from c+ and c- beams in terms of their intensity. Based on this beam splitting scheme, real-time readout of the magnetic signal stored on the magnetic tape 4 can be achieved.

In this setup 2, the x-ray beam 8 has a beam energy of 7.127 keV and a wavelength of 1.74 Angstrom. In this example, the beam energy of 7.127 keV corresponds to the absorption edge of gamma ferric oxide (γ-Fe2O3), where the magnetic contrast is maximal. Ferric oxide was commonly used as magnetic medium in audio tapes. Absorption characteristics of the magnetic material used therefore can be a further relevant criteria for the adjustment of the frequency of the x-ray beam 8. The algorithm that is used to identify the magnitude and the direction of the magnetic field on the magnetic tape 4 is straightforward. In the proposed experimental setup 2, the x-ray beam 8 is split into two circularly polarized beams c+, c- and the two detectors 16a, 16b measure the magnetic signal in terms of the changed beam intensity due to the magnetization of the magnetic tape. The detector 16a detects the intensity I_{c}- of the modified beam c-' and the other detector 16b measures the intensity I_{c+} of the modified beam c+'. To obtain the magnetic information on the tape (magnetic contrast), the two detected quantities are divided: I_{c-}/I_{c+}.

The beam spot on the magnetic tape has been established to be of a few microns, preferably the size of the recording or playback head gap, in the vertical direction and 100 microns in the horizontal direction. These values correspond approximately to the resolution of a standard magnetic read head (in the vertical direction)and to the audio track size (in the horizontal direction) on the magnetic tape 4. These values can be adjusted as needed using slits to shape the beams.

Figure 3 schematically shows a second setup for the generation of the circularly polarized x-ray beams. Presently, a particle beam, typically an electron beam, passes along a first undulator and a second undulator. Each undulator generates a circularly polarized x-ray beam which is then directed towards and through the magnetic tape which is advanced. The remaining parts of the second setup are equal to the components and conditions used for the first setup.

## Claims

1. A method for contactless readout of the magnetic information stored on magnetic tapes (4), said magnetic information being encoded by the magnetization value and direction stored on the magnetic tapes (4), comprising the steps of:
a) providing a first circularly polarized x-ray beam (c+) and a second circularly polarized x-ray beam (c-);
b) orienting the first circularly polarized X-ray beam (c+) and the second circularly polarized X-ray beam (c-) towards the magnetic tape (4);
c) reading out the first circularly polarized X-ray beam (c+) and the second circularly polarized X-ray beam (c-) after their passage through the magnetic tape while advancing the magnetic tape, and
d) determining the magnetic information by the difference between the two readout signals from the first x-ray beam (c+) and the second x-ray beam (c-) based on X-ray magnetic circular dichroism.

2. The method according to claim 1, wherein
for the provision of the two circularly polarized x-ray beams (c+) and (c-), an X-ray source for generating a linearly polarized x-ray beam is provided and the linearly polarized X-ray beam is split into a first linearly polarized X-ray beam and a second linearly polarized X-ray beam and the first linearly polarized X-ray beam and the second linearly polarized X-ray beam are converted into the first circularly polarized beam (c+) and the second circularly polarized beam (c-) .

3. The method according to claim 1, wherein
for the provision of the two circularly polarized x-ray beams (c+) and (c-), a particle beam, preferably an electron beam, is provided which passes along a first undulator to generate the first circularly polarized X-ray beam and along a second undulator to generate the second circularly polarized X-ray beam.

4. The method according to any of the preceding claims,
wherein the beam spots of the first x-ray beam (c+) and the second x-ray beam (c-) when passing through the magnetic tape (4) are in the range of 2 to 20 microns, preferably in the range of 2 microns, or generally matching the read or recording head gap, in the vertical direction and 20 to 200 microns, preferably 100 microns, in the horizontal direction whereby these values correspond approximately to an audio track size of the magnetic information stored on the magnetic tape (4) in the horizontal direction and to the resolution of a magnetic read head in the vertical direction.

5. The method according to any of the preceding claims,
wherein the beam energy of the x-ray beam (8) is in the range from 2 to 50 keV, preferably in the range from 5 to 10 keV.

6. The method according to any of the preceding claims,
wherein the beam intensity of the first x-ray beam (c+) and the second x-ray beam (c-) ranges from 10⁸ to 10¹³ photons/second.

7. The method according to any of the preceding claims,
wherein the readout sample rate is in the range from 20 to 200 kHz, preferably around 100 kHz.

8. The method according to any of the preceding claims wherein an algorithm to identify the magnitude and the direction of the magnetic information in form the stored magnetic information being encoded by the magnetization value and direction on the magnetic tapes (4) uses the signal of two detectors (16a, 16b); first detector (16b) detects the signal from the first X-ray beam (c+) and the second detector (16a) detects the signal from the second X-ray beam (c-) wherein the magnetic information on the magnetic tape (4) is determined by the division of the two detected signals c-/c+ or vice versa.
